# EUROPEAN PATENT SPECIFICATION

(11) **EP 4 107 384 B1**
(45) Date of publication and mention of the grant of the patent: **04.12.2024**
(21) Application number: 21710575.8
(22) Date of filing: 18.02.2021
(51) Int. Cl.: F02M 21/02, F02M 21/06, F02B 43/10, F02M 25/08, F02M 31/18

(54) **FUELLING SYSTEM FOR LIQUEFIED NATURAL GAS VEHICLES**
BETANKUNGSSYSTEM FÜR FLÜSSIGGASFAHRZEUGE
SYSTÈME D'ALIMENTATION EN CARBURANT POUR VÉHICULES À GAZ NATUREL LIQUÉFIÉ

(30) Priority: 19.02.2020 IT 202000003377
(43) Date of publication of application: 28.12.2022
(73) Proprietor: Graf Industries S.p.A., 41015 Nonantola (MO) (IT)
(72) Inventor: PALELLA, Marco, 41015 Nonantola (MO) (IT)
(74) Representative: Luppi, Emanuele
(86) International application number: PCT/IB2021/051389
(87) International publication number: WO 2021/165880

(56) References cited:
- EP-A1- 1 990 272
- WO-A1-2016/126025
- DE-A1- 102016 208 166
- DE-A1- 102018 203 210
- KR-A- 20110 042 911
- KR-B1- 101 643 085
- US-A1- 2019 338 713

## Description

### Technical Field

The present invention relates to a fuelling system for liquefied natural gas vehicles.

### Background Art

It is well known that in recent years there is a considerable need to reduce environmental pollution caused by motor vehicle emissions.

For this reason, natural gas powered vehicles are becoming more and more widespread. These vehicles provide excellent performance and considerably reduce emissions of pollutants and particulate matter, at the same time.

Natural gas is a mixture mainly composed of methane and smaller amounts of ethane, propane, butane and other gases.

In order to be stored inside vehicle tanks, natural gas undergoes compression or liquefaction processes.

In particular, through the liquefaction process, natural gas is reduced in volume by about 600 times and thus allows for the storage and transportation of higher quantities of fuel than the use of compressed natural gas.

As a result, liquefied natural gas can be easily used to power small vehicles while ensuring a high range on a full tank.

Liquefaction involves a series of cooling and condensation processes of the natural gas to obtain a liquid with a boiling temperature of about -160 °C at atmospheric pressure.

The fuelling systems for liquefied natural gas vehicles of known type generally comprise a tank intended to contain the liquefied natural gas and a fuelling line, connected in a fluid-operated manner to the tank and adapted to convey the natural gas itself to the vehicle engine.

In particular, the fuelling systems of known type require that the fuelling line be provided with a heating unit, such as e.g. a heat exchanger, intended to heat the liquefied natural gas so as to convert it into gaseous natural gas, which can be used by the engine during combustion.

There are, however, a few drawbacks to the known type of fuelling systems.

In fact, the liquefied natural gas has a remarkably low boiling point and evaporates rapidly into gaseous natural gas; this inevitably leads to an increase in pressure inside the tank with consequent safety risks.

For this reason, the tanks of liquefied natural gas vehicles are provided with a safety valve through which, after a predefined pressure value has been exceeded, the gaseous component escapes from the tank itself and releases into the environment.

It is easy to ascertain how this results in a large loss of fuel, which affects the cost of maintaining and operating the vehicle.

Not least, the release of natural gas into the environment results in increased environmental pollution.

Fuelling systems of the known type for liquefied natural gas vehicles are also disclosed in US 2019/338713 A1, DE 10 2018 203210 A1, WO 2016/126025 A1 and KR 2011 0042911 A.

### Description of the Invention

The main aim of the present invention is to devise a fuelling system for liquefied natural gas vehicles that allows the exploitation of gaseous natural gas generated by the evaporation of liquefied natural gas.

Another object of the present invention is to devise a fuelling system for liquefied natural gas vehicles that will reduce the environmental impact caused by the release of gaseous natural gas into the environment.

Another object of the present invention is to devise a fuelling system for liquefied natural gas vehicles that allows overcoming the aforementioned drawbacks of the prior art within a simple, rational, easy, effective to use and low cost solution. The objects set out above are achieved by the present fuelling system for liquefied natural gas vehicles having the characteristics of claim 1.

### Brief Description of the Drawings

Other characteristics and advantages of the present invention will become more evident from the description of a preferred, but not exclusive, embodiment of a fuelling system for liquefied natural gas vehicles, illustrated by way of an indicative, yet non-limiting example, in the accompanying tables of drawings wherein:
Figure 1 is a schematic representation of a fuelling system for liquefied natural gas vehicles according to the invention;
Figure 2 represents a block diagram of the fuelling system according to the invention;
Figure 3 is an axonometric view of a vehicle provided with the fuelling system according to the invention.

### Embodiments of the Invention

With special reference to these figures, reference numeral 1 globally indicates a fuelling system for liquefied natural gas vehicles.

Within the present disclosure, natural gas is defined as a mixture composed of methane, ethane, propane, butane and other combustible gases. Through a series of cooling and condensation processes, natural gas is liquefied to obtain a liquid with a boiling temperature of approximately -160 °C at atmospheric pressure so that it can be easily stored in vehicles.

The fuelling system 1 comprises at least one tank 2 adapted to contain liquefied natural gas L intended to fuel at least one engine 3 of a vehicle 4.

Within of the present disclosure, the vehicle 4 is of the type of a land, water, or air vehicle intended to transport people and/or goods. In the embodiment shown in the figures, the vehicle 4 is, e.g., of the type of a motor vehicle.

The fuelling system 1 is, moreover, provided with at least one safety valve 5 associated with the tank 2 and adapted to allow the escape of gaseous natural gas G, generated by the evaporation of part of the liquefied natural gas L, after reaching a predefined pressure value inside the tank 2.

The liquefied natural gas L, in fact, has an extremely low boiling point and converts rapidly to the gaseous phase under normal storage conditions, if not used.

For example, the predefined pressure value can be set, e.g., to 16 bar.

It cannot, however, be ruled out that depending on the structural characteristics of the tank 2 and of the fuelling system 1, the predefined pressure value may be different.

As the amount of generated gaseous natural gas G increases, the pressure inside the tank 2 inevitably increases; after the predefined pressure value has been reached, the safety valve 5 allows the gaseous natural gas G to escape from the tank 2.

Thus, the safety valve 5 aims to ensure that a safe state of the vehicle 4 is maintained.

The fuelling system 1 comprises at least one main fuelling line 6 configured to take the liquefied natural gas L from the tank 2 and convey it to the engine 3.

The main fuelling line 6 comprises at least one main fluid-operated connecting circuit 7 positioned between the tank 2 and the engine 3.

The main fuelling line 6 comprises at least one heating unit 8 adapted to heat the liquefied natural gas L coming out of the tank 2 to obtain gaseous natural gas G.

The heating unit 8 is of the type of a heat exchanger operating by means of a hot fluid.

In particular, the heating unit 8 comprises a coil duct partly wrapped around part of the main circuit 7, inside which the hot fluid flows.

The coil duct may be connected to a heat source such as, e.g., a cooling circuit of the engine 3. This provides recovery of the thermal energy generated by the engine 3 that can be used to operate the heating unit 8.

Therefore, it is easy to understand that the temperature of the hot fluid at inlet of the coil duct has a temperature comprised between 50 and 130°C while at outlet of the coil duct it can also reach temperatures lower than -100°C.

In addition, the hot fluid is fed into the coil circuit at a pressure higher than atmospheric pressure, such as e.g. at a pressure of 16 bar.

Similarly, the liquefied natural gas L reaches the heating unit at a temperature below -160°C and exits as gaseous natural gas G.

The increase in temperature of the liquefied natural gas L causes, in fact, the evaporation of the same and a consequent increase in the pressure of the gaseous natural gas G that is conveyed to the engine 3.

Conveniently, the fuelling system 1 comprises at least a first pressure regulating device 9 positioned downstream of the main fuelling line 6 and adapted to regulate the pressure of the gaseous natural gas G entering the engine 3.

The first pressure regulating device 9, e.g. of the type of a pneumatic control valve, is configured to emit gaseous natural gas G at the operating pressure of the engine 3.

According to the invention, the fuelling system 1 comprises at least one secondary fuelling line 10 configured to take the gaseous natural gas G from the tank 2 and to convey it to the engine 3.

The secondary fuelling line 10 comprises:
- at least one storage vessel 11 adapted to store the gaseous natural gas G; and
- at least one compressor assembly 12 positioned upstream of the storage vessel 11 and adapted to compress the gaseous natural gas G.

The secondary fuelling line 10 aims to take the gaseous natural gas G, generated by the evaporation of the liquefied natural gas L, before it escapes from the tank 2 through the safety valve 5.

Specifically, the gaseous natural gas G is taken from the tank 2 when reaching a minimum pressure value, which is lower than the predefined pressure value.

The minimum pressure value is comprised, e.g., between 10.0 and 10.5 bar.

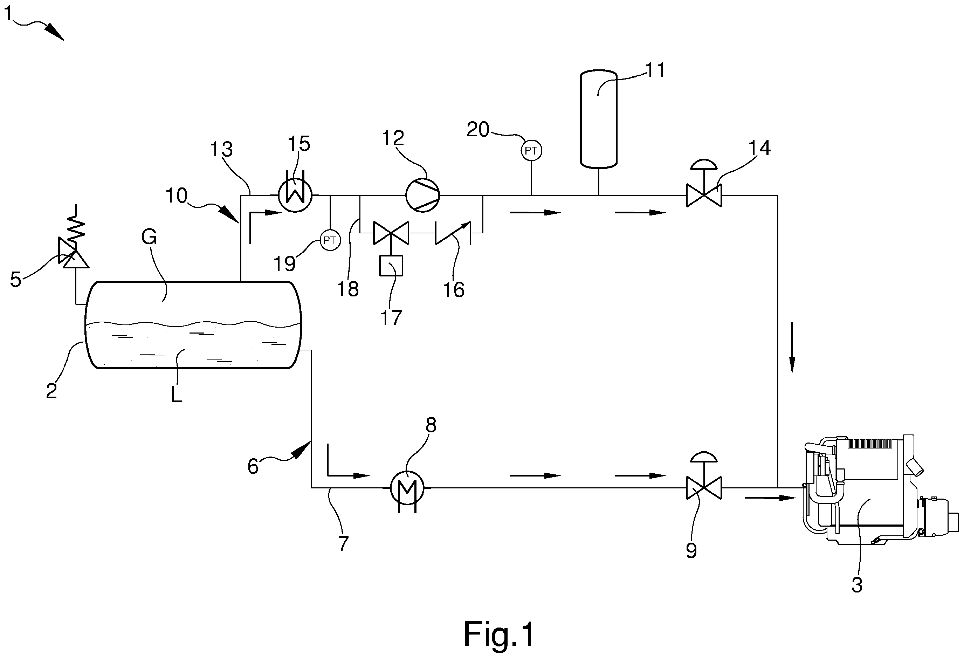

As schematically shown in Figure 1, the secondary fuelling line 10 comprises at least one secondary fluid-operated connecting circuit 13 positioned between the tank 2 and the engine 3 and along which the compressor assembly 12 and the storage vessel 11 are arranged.

The storage vessel 11, of the type of, e.g., a cylinder, allows storing the generated gaseous natural gas G inside the tank 2 to a maximum pressure value. The maximum pressure value is comprised, e.g., between 50 and 100 bar.

Conveniently, the fuelling system 1 comprises at least a second pressure regulating device 14 positioned downstream of the secondary fuelling line 10 and adapted to regulate the pressure of the gaseous natural gas G entering the engine 3.

As shown in Figure 1, the second pressure regulating device 14 is positioned downstream of the storage vessel 11.

Similarly to the first pressure regulating device 9, the second pressure regulating device 14 is, e.g., of the type of a pneumatic control valve and is configured to emit gaseous natural gas G at the operating pressure of the engine 3.

The compressor assembly 12 allows increasing the amount of gaseous natural gas G that can be stored in the storage vessel 11 for later use by the engine 3.

The compressor assembly 12 is selected from the list comprising: centrifugal compressor, volumetric compressor, multi-stage compressor.

The compressor assembly 12 is operated when the pressure inside the tank 2 reaches an activation pressure value above the minimum pressure value and below the predefined pressure value.

The activation pressure value is comprised, e.g., between 15.0 and 15.9 bar.

Advantageously, the secondary fuelling line 10 comprises at least one heating assembly 15 positioned upstream of the storage vessel 11 and adapted to heat the gaseous natural gas G flowing out of the tank 2.

The gaseous natural gas G contained in the tank 2 is at a temperature comprised between about -100 °C and -160 °C; the heating assembly 15 aims to heat the gaseous natural gas G to prevent too low a temperature from damaging the compressor assembly 12.

The heating assembly 15 is of the type of a heat exchanger operating, e.g., at room temperature.

In particular, the heating assembly 15 comprises a coil tube wrapped around part of the secondary circuit 13, inside which a fluid at room temperature flows. In more detail, the coil tube is connected with the exterior of the vehicle 4 and air flows therein.

The secondary fuelling line 10 comprises at least one control device 16 positioned upstream of the storage vessel 11 and adapted to allow a unidirectional flow of gaseous natural gas G from the tank 2 to the storage vessel 11.

The control device 16 is, e.g., of the type of a check valve and is intended to prevent the gaseous natural gas G from flowing from the storage vessel 11 to the tank 2.

Such an embodiment ensures that there is no backflow of gaseous natural gas G into the tank 2 as a result of the pressure increase in the storage vessel 11.

The secondary fuelling line 10 comprises at least one flow regulating device 17 positioned upstream of the control device 16 and adapted to regulate the flow of the gaseous natural gas G.

The flow regulating device 17 is of the type of, e.g., a motorized valve and is operable to allow/block the flow of the gaseous natural gas G through the control device 16.

In particular, the flow regulating device 17 is operated with the engine 3 turned off so as to allow the gaseous natural gas G to flow to the storage vessel 11 when the vehicle 4 is stationary.

As shown in the figures, the flow regulating device 17 and the control device 16 are arranged in succession along a branch 18 of the secondary fuelling line 10, in parallel with the compressor assembly 12.

In actual facts, as will be described in more detail later in this disclosure, the gaseous natural gas G may flow from the tank 2 to the storage vessel 11 along the secondary circuit 13, through the compressor assembly 12, or along the branch 18.

Conveniently, the secondary fuelling line 10 comprises at least a first pressure sensor 19 positioned upstream of the compressor assembly 12 and adapted to detect at least a first pressure value of the gaseous natural gas G inside the tank 2.

In the embodiment shown in the figures, the first pressure sensor 19 is positioned between the heating assembly 15 and the compressor assembly 12. Embodiments cannot however be ruled out wherein the first pressure sensor 19 is arranged upstream of the heating assembly 15.

The secondary fuelling line 10 further comprises at least a second pressure sensor 20 positioned downstream of the compressor assembly 12 and adapted to detect at least a second pressure value of the gaseous natural gas G inside the storage vessel 11.

The pressure sensors 19, 20 are adapted to determine the activation/deactivation of at least one of either the compressor assembly 12 or the flow regulating device 17.

The fuelling system 1 also comprises at least one electronic control unit 21.

The electronic control unit 21 comprises at least one drive unit 22 operationally connected to the first pressure sensor 19 and to the second pressure sensor 20 and configured to activate/deactivate at least one of either the flow regulating device 17 or the compressor assembly 12.

Conveniently, the electronic control unit 21 is operationally connected to an electronic station 23 of the vehicle 4.

In more detail, the drive unit 22 is configured to detect the operating status of the engine 3 by the electronic station 23, so as to activate/deactivate the flow regulating device 17 and/or the compressor assembly 12.

As previously described, in fact, the flow regulating device 17 and/or the compressor assembly 12 are activated only when the engine 3 is switched off. The operation of the fuelling system 1 according to the invention is as follows. During the use of the vehicle 4, the liquefied natural gas L is conveyed along the main fuelling line 6 to the heating unit 8, where it is converted into gaseous natural gas G.

Through the first pressure regulating device 9, the gaseous natural gas G reaches the engine 3 where combustion occurs.

With the engine 3 switched off, the liquefied natural gas L in the tank 2 evaporates into gaseous natural gas G, causing a pressure increase inside the tank itself.

The first pressure sensor 19 detects the pressure of the gaseous natural gas G inside the tank 2 and generates the first pressure value.

When the first pressure value reaches the minimum pressure value, the drive unit 22 activates the flow regulating device 17 in order to allow the gaseous natural gas G contained in the tank 2 to flow to the storage vessel 11, through the branch 18.

When the second pressure value reaches the activation pressure value, the drive unit 22 deactivates the flow regulating device 17 and activates the compressor assembly 12 in order to compress the gaseous natural gas G to be stored into the storage vessel 11.

Finally, when the second pressure value reaches the maximum pressure value of the storage vessel 11, the drive unit 22 deactivates the compressor assembly 12. Only at this point, if the pressure inside the tank 2 increases further and reaches the predefined pressure value, does the gaseous natural gas G escape from the tank through the safety valve 5.

At the time when the engine 3 is started again, the gaseous natural gas G is conveyed to the engine 3 from the secondary fuelling line 10 and from the main fuelling line 6.

In particular, the flow of the gaseous natural gas G at inlet to the engine 3 is regulated by the pressure regulating devices 9, 14 so that the engine itself is preferably fuelled from the secondary fuelling line 10.

This way, the gaseous natural gas G previously stored in the storage vessel 11 is first used and, then, is used the gaseous natural gas G coming from the main fuelling line 6.

An additional aspect of the present invention relates to a liquefied natural gas vehicle 4.

The vehicle 4 is of the type of a land, water or air vehicle intended for the transportation of persons and/or goods.

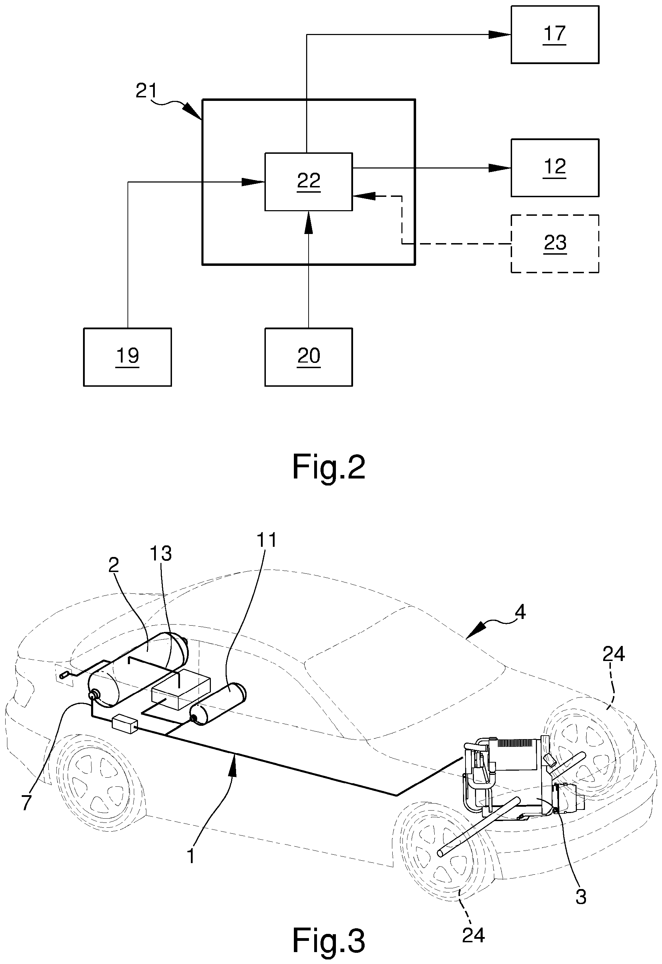

By way of example, in the embodiment shown in Figure 3, the vehicle 4 is, e.g., of the type of a motor vehicle.

The vehicle 4 comprises movement means 24 adapted to move the vehicle itself and at least one engine 3 adapted to operate the movement means 24.

Again with reference to the embodiment shown in Figure 3, the movement means 24 are of the wheel type.

It is easy to appreciate, however, that depending on the type of vehicle 4, the movement means 24 may be of a different type.

For example, the movement means 24 may be of the type of propellers or the like, in the case of water vehicles, or of the type of turbines or the like, in the case of air vehicles.

## Claims

1. Fuelling system (1) for liquefied natural gas vehicles comprising:
- at least one tank (2) adapted to contain liquefied natural gas (L) intended to fuel at least one engine (3) of a vehicle (4);
- at least one safety valve (5) associated with said tank (2) and adapted to allow the escape of gaseous natural gas (G), generated by the evaporation of part of said liquefied natural gas (L), after reaching a predefined pressure value inside said tank (2);
- at least one main fuelling line (6) configured to take said liquefied natural gas (L) from said tank (2) and convey it to said engine (3);
- at least one secondary fuelling line (10) configured to take said gaseous natural gas (G) from said tank (2) and to convey it to said engine (3) and comprising:
- at least one storage vessel (11) adapted to store said gaseous natural gas (G); and
- at least one compressor assembly (12) positioned upstream of said storage vessel (11) and adapted to compress said gaseous natural gas (G);
**characterized by** the fact that said secondary fuelling line (10) comprises at least one heating assembly (15) positioned upstream of said storage vessel (11) and adapted to heat said gaseous natural gas (G) coming out of said tank (2).

2. Fuelling system (1) according to claim 1, **characterized by** the fact that said secondary fuelling line (10) comprises at least one control device (16) positioned upstream of said storage vessel (11) and adapted to allow a unidirectional flow of said gaseous natural gas (G) from said tank (2) to said storage vessel (11).

3. Fuelling system (1) according to claim 2, **characterized by** the fact that said secondary fuelling line (10) comprises at least one flow regulating device (17) positioned upstream of said control device (16) and adapted to regulate the flow of said gaseous natural gas (G).

4. Fuelling system (1) according to one or more of the preceding claims, **characterized by** the fact that said secondary fuelling line (10) comprises at least a first pressure sensor (19) positioned upstream of said compressor assembly (12) and adapted to detect at least a first pressure value of said gaseous natural gas (G) inside said tank (2).

5. Fuelling system (1) according to one or more of the preceding claims, **characterized by** the fact that said secondary fuelling line (10) comprises at least a second pressure sensor (20) positioned downstream of said compressor assembly (12) and adapted to detect at least a second pressure value of said gaseous natural gas (G) inside said storage vessel (11).

6. Fuelling system (1) according to one or more of the preceding claims, **characterized by** the fact that said main fuelling line (6) comprises at least one heating unit (8) adapted to heat said liquefied natural gas (L) coming out of said tank (2) to obtain gaseous natural gas (G).

7. Fuelling system (1) according to one or more of the preceding claims, **characterized by** the fact that it comprises at least one pair of pressure regulating devices (9, 14) positioned downstream of said main fuelling line (6) and of said secondary fuelling line (10) and adapted to regulate the pressure of said gaseous natural gas (G) entering said engine (3).

8. Fuelling system (1) according to claims 3, 4 and 5, **characterized by** the fact that it comprises at least one electronic control unit (21) comprising at least one drive unit (22) operationally connected to said first pressure sensor (19) and to said second pressure sensor (20) and configured to activate/deactivate at least one of either said flow regulating device (17) or said compressor assembly (12).

9. Liquefied natural gas vehicle (4) comprising:
- movement means (24) adapted to move said vehicle (4); and
- at least one engine (3) adapted to operate said movement means (24);
**characterized by** the fact that it comprises at least one fuelling system (1) according to one or more of the preceding claims.

## Patentansprüche

1. Betankungssystem (1) für Flüssigerdgas-Fahrzeuge, umfassend:
- mindestens einen Tank (2), der dazu geeignet ist, Flüssigerdgas (L) zu fassen, das dazu vorgesehen ist, mindestens eine Kraftmaschine (3) eines Fahrzeugs (4) anzutreiben;
- mindestens ein Sicherheitsventil (5), das dem Tank (2) zugeordnet und dazu geeignet ist, das Entweichen von gasförmigem Erdgas (G) zu ermöglichen, das durch die Verdampfung eines Teils des Flüssigerdgases (L) nach Erreichen eines vordefinierten Druckwerts innerhalb des Tanks (2) entsteht;
- mindestens eine Hauptbetankungsleitung (6), die dazu ausgelegt ist, das Flüssigerdgas (L) aus dem Tank (2) aufzunehmen und dieses zur Kraftmaschine (3) zu leiten;
- mindestens eine sekundäre Betankungsleitung (10), die dazu ausgelegt ist, das gasförmige Erdgas (G) aus dem Tank (2) aufzunehmen und dieses zur Kraftmaschine (3) zu leiten, und die Folgendes umfasst:
- mindestens einen Speicherbehälter (11), der dazu geeignet ist, das gasförmigen Erdgas (G) zu speichern; und
- mindestens eine Kompressoranordnung (12), die stromaufwärts des Speicherbehälters (11) positioniert und dazu geeignet ist, das gasförmige Erdgas (G) zu komprimieren;
**dadurch gekennzeichnet, dass** die sekundäre Betankungsleitung (10) mindestens eine Heizanordnung (15) umfasst, die stromaufwärts des Speicherbehälters (11) positioniert und dazu geeignet ist, das aus dem Tank (2) kommende gasförmige Erdgas (G) zu erwärmen.

2. Betankungssystem (1) nach Anspruch 1, **dadurch gekennzeichnet, dass** die sekundäre Betankungsleitung (10) mindestens eine Steuervorrichtung (16) umfasst, die stromaufwärts des Speicherbehälters (11) positioniert und dazu geeignet ist, einen unidirektionalen Durchfluss des gasförmigen Erdgases (G) vom Tank (2) zum Speicherbehälter (11) zu ermöglichen.

3. Betankungssystem (1) nach Anspruch 2, **dadurch gekennzeichnet, dass** die sekundäre Betankungsleitung (10) mindestens eine Durchflussregelungsvorrichtung (17) umfasst, die stromaufwärts der Steuervorrichtung (16) positioniert und dazu geeignet ist, den Durchfluss des gasförmigen Erdgases (G) zu regeln.

4. Betankungssystem (1) nach einem oder mehreren der vorhergehenden Ansprüche, **dadurch gekennzeichnet, dass** die sekundäre Betankungsleitung (10) mindestens einen ersten Drucksensor (19) umfasst, der stromaufwärts der Kompressoranordnung (12) positioniert und dazu geeignet ist, mindestens einen ersten Druckwert des gasförmigen Erdgases (G) innerhalb des Tanks (2) zu detektieren.

5. Betankungssystem (1) nach einem oder mehreren der vorhergehenden Ansprüche, **dadurch gekennzeichnet, dass** die sekundäre Betankungsleitung (10) mindestens einen zweiten Drucksensor (20) umfasst, der stromabwärts der Kompressoranordnung (12) positioniert und dazu geeignet ist, mindestens einen zweiten Druckwert des gasförmigen Erdgases (G) innerhalb des Speicherbehälters (11) zu detektieren.

6. Betankungssystem (1) nach einem oder mehreren der vorhergehenden Ansprüche, **dadurch gekennzeichnet, dass** die Hauptbetankungsleitung (6) mindestens eine Heizeinheit (8) umfasst, die dazu geeignet ist, das aus dem Tank (2) kommende Flüssigerdgas (L) zu erwärmen, um gasförmiges Erdgas (G) zu erhalten.

7. Betankungssystem (1) nach einem oder mehreren der vorhergehenden Ansprüche, **dadurch gekennzeichnet, dass** es mindestens ein Paar Druckregelungsvorrichtungen (9, 14) umfasst, die stromabwärts der Hauptbetankungsleitung (6) und der sekundären Betankungsleitung (10) positioniert und dazu geeignet sind, den Druck des in die Kraftmaschine (3) eintretenden gasförmigen Erdgases (G) zu regeln.

8. Betankungssystem (1) nach den Ansprüchen 3, 4 und 5, **dadurch gekennzeichnet, dass** es mindestens eine elektronische Steuereinheit (21) umfasst, die mindestens eine Antriebseinheit (22) umfasst, die mit dem ersten Drucksensor (19) und mit dem zweiten Drucksensor (20) wirkverbunden und dazu ausgelegt ist, mindestens eine entweder der Durchflussregelungsvorrichtung (17) oder der Kompressoranordnung (12) zu aktivieren/deaktivieren.

9. Flüssigerdgas-Fahrzeug (4), umfassend:
- Bewegungsmittel (24), die dazu geeignet sind, das Fahrzeug (4) zu bewegen; und
- mindestens eine Kraftmaschine (3), die dazu geeignet ist, die Bewegungsmittel (24) zu betreiben;
**dadurch gekennzeichnet, dass** es mindestens ein Betankungssystem (1) nach einem der mehreren der vorhergehenden Ansprüche umfasst.

## Revendications

1. - Système d'alimentation en carburant (1) pour des véhicules au gaz naturel liquéfié comprenant :
- au moins un réservoir (2) agencé pour contenir du gaz naturel liquéfié (L) destiné à alimenter en carburant au moins un moteur (3) d'un véhicule (4) ;
- au moins une soupape de sécurité (5) associée audit réservoir (2) et agencée pour permettre l'échappement de gaz naturel gazeux (G), généré par l'évaporation d'une partie dudit gaz naturel liquéfié (L), après avoir atteint une valeur de pression prédéfinie à l'intérieur dudit réservoir (2) ;
- au moins une conduite d'alimentation en carburant principale (6) configurée pour prélever ledit gaz naturel liquéfié (L) à partir dudit réservoir (2) et pour acheminer celui-ci jusqu'audit moteur (3) ;
- au moins une conduite d'alimentation en carburant secondaire (10) configurée pour prélever ledit gaz naturel gazeux (G) à partir dudit réservoir (2) et pour acheminer celui-ci jusqu'audit moteur (3), et comprenant :
- au moins une cuve de stockage (11) agencée pour stocker ledit gaz naturel gazeux (G) ; et
- au moins un ensemble compresseur (12) positionné en amont de ladite cuve de stockage (11) et agencé pour comprimer ledit gaz naturel gazeux (G) ;
**caractérisé par le fait que** ladite conduite d'alimentation en carburant secondaire (10) comprend au moins un ensemble chauffant (15) positionné en amont de ladite cuve de stockage (11) et agencé pour chauffer ledit gaz naturel gazeux (G) sortant dudit réservoir (2).

2. - Système d'alimentation en carburant (1) selon la revendication 1, **caractérisé par le fait que** ladite conduite d'alimentation en carburant secondaire (10) comprend au moins un dispositif de commande (16) positionné en amont de ladite cuve de stockage (11) et agencé pour permettre un écoulement unidirectionnel dudit gaz naturel gazeux (G) dudit réservoir (2) à ladite cuve de stockage (11) .

3. - Système d'alimentation en carburant (1) selon la revendication 2, **caractérisé par le fait que** ladite conduite d'alimentation en carburant secondaire (10) comprend au moins un dispositif de régulation d'écoulement (17) positionné en amont dudit dispositif de commande (16) et agencé pour réguler l'écoulement dudit gaz naturel gazeux (G).

4. - Système d'alimentation en carburant (1) selon une ou plusieurs des revendications précédentes, **caractérisé par le fait que** ladite conduite d'alimentation en carburant secondaire (10) comprend au moins un premier capteur de pression (19) positionné en amont dudit ensemble compresseur (12) et agencé pour détecter au moins une première valeur de pression dudit gaz naturel gazeux (G) à l'intérieur dudit réservoir (2).

5. - Système d'alimentation en carburant (1) selon une ou plusieurs des revendications précédentes, **caractérisé par le fait que** ladite conduite d'alimentation en carburant secondaire (10) comprend au moins un second capteur de pression (20) positionné en aval dudit ensemble compresseur (12) et agencé pour détecter au moins une seconde valeur de pression dudit gaz naturel gazeux (G) à l'intérieur de ladite cuve de stockage (11).

6. - Système d'alimentation en carburant (1) selon une ou plusieurs des revendications précédentes, **caractérisé par le fait que** ladite conduite d'alimentation en carburant principale (6) comprend au moins une unité chauffante (8) agencée pour chauffer ledit gaz naturel liquéfié (L) sortant dudit réservoir (2) pour obtenir du gaz naturel gazeux (G).

7. - Système d'alimentation en carburant (1) selon une ou plusieurs des revendications précédentes, **caractérisé par le fait qu'**il comprend au moins une paire de dispositifs de régulation de pression (9, 14) positionnés en aval de ladite conduite d'alimentation en carburant principale (6) et de ladite conduite d'alimentation en carburant secondaire (10) et agencés pour réguler la pression dudit gaz naturel gazeux (G) entrant dans ledit moteur (3).

8. - Système d'alimentation en carburant (1) selon les revendications 3, 4 et 5, **caractérisé par le fait qu'**il comprend au moins une unité de commande électronique (21) comprenant au moins une unité de pilotage (22) reliée de manière fonctionnelle audit premier capteur de pression (19) et audit second capteur de pression (20) et configurée pour activer/désactiver au moins l'un dudit dispositif de régulation d'écoulement (17) et dudit ensemble compresseur (12) .

9. - Véhicule au gaz naturel liquéfié (4) comprenant :
- des moyens de déplacement (24) agencés pour déplacer ledit véhicule (4) ; et
- au moins un moteur (3) agencé pour actionner lesdits moyens de déplacement (24) ;
**caractérisé par le fait qu'**il comprend au moins un système d'alimentation en carburant (1) selon une ou plusieurs des revendications précédentes.
